# FASCICULE DE BREVET EUROPEEN

(11) **EP 2 824 361 B1**
(45) Date de publication et mention de la délivrance du brevet: **18.07.2018**
(21) Numéro de dépôt: 14174597.6
(22) Date de dépôt: 26.06.2014
(51) Int. Cl.: F16F 15/121, F16F 15/12

(54) **Double volant amortisseur à moyens d'amortissements perfectionnés**
Gedämpftes Doppellenkrad mit perfektionierten Dämpfungsmitteln
Dual mass flywheel with improved damping means

(30) Priorité: 08.07.2013 FR 1356687
(43) Date de publication de la demande: 14.01.2015
(73) Titulaire: Valeo Embrayages, 80009 Amiens Cedex 2 (FR)
(72) Inventeur: Lopez-Perez, Carlos, 28005 MADRID (ES)
(74) Mandataire: Cardon, Nicolas

(56) Documents cités:
- EP-A1- 1 195 536
- FR-A1- 2 938 030
- US-A- 2 551 718
- US-A1- 2003 106 763

## Description

### Domaine technique de l'invention

L'invention se rapporte au domaine des transmissions pour véhicule automobile et concerne, plus particulièrement, un double volant amortisseur.

### Etat de la technique

Les doubles volants amortisseurs (DVA) comportent un volant d'inertie primaire et un volant d'inertie secondaire coaxiaux, mobiles en rotation l'un par rapport à l'autre à la faveur d'un palier tel qu'un roulement à billes. Le volant d'inertie primaire est destiné à être fixé au vilebrequin d'un moteur à combustion. Le volant d'inertie secondaire forme généralement un plateau de réaction destiné à coopérer avec un disque de friction d'un d'embrayage. Le volant primaire et le volant secondaire sont couplés en rotation par des moyens d'amortissement permettant de transmettre un couple et d'amortir les acyclismes de rotation. Les moyens d'amortissement sont typiquement des ressorts hélicoïdaux, cintrés, disposés, de façon circonférentielle, dans une chambre annulaire, étanche, qui est formée dans le volant primaire et remplie d'un agent de lubrification. Les ressorts hélicoïdaux sont en appui à leurs extrémités, sur des bossages des parois latérales de la chambre annulaire et sur des pattes radiales d'un voile annulaire fixé par des rivets au volant secondaire. Ainsi, toute rotation d'un desdits volants par rapport à l'autre provoque une compression des ressorts dans un sens ou dans l'autre, qui exerce une force de rappel apte à rappeler lesdits éléments vers une position angulaire relative de repos. Un tel double volant amortisseur est connu du document US 2003/106763. La raideur d'un tel amortisseur est déterminée en fonction du nombre de ressorts hélicoïdaux qui le composent, de la raideur intrinsèque des ressorts et du diamètre d'implantation des ressorts. Le choix de la raideur de tels amortisseurs de torsion résulte d'un compromis entre l'efficacité de filtration des acyclismes qui augmente lorsque la raideur diminue et la capacité à transmettre le couple moteur maximum sans pour autant que les spires des ressorts viennent en butée les unes contre les autres, qui nécessite une raideur suffisante.

Afin d'améliorer les performances de filtration des vibrations à faible couple, il est connu de prévoir des amortisseurs de torsion dont la courbe caractéristique du couple transmis en fonction du débattement angulaire présente plusieurs pentes. Ainsi, à faible couple, la raideur de l'amortisseur est moindre alors que, lorsque l'on approche du couple moteur maximum à transmettre, la raideur de l'amortisseur de torsion est plus importante. Toutefois, les zones de changement de raideurs provoquent des discontinuités et chocs qui nuisent à la qualité de l'amortissement des acyclismes.

Par ailleurs, les ressorts hélicoïdaux étant disposés de manière circonférentielle, ils sont extrêmement sensibles à la force centrifuge. Aussi, le volant primaire retient radialement les ressorts afin d'éviter leur éjection. Toutefois, ces moyens de retenue radiale introduisent des frottements parasitaires qui affectent la fonction d'amortissement, en bloquant les ressorts, lorsque la vitesse de rotation est trop importante. Il est certes prévu de diminuer l'effet de ces frottements parasitaires, en prévoyant des géométries complexes, des traitements de surface ou l'introduction de lubrifiant. Toutefois, ces mesures complexifient la fabrication des doubles volants amortisseurs et ne sont donc pas totalement satisfaisantes.

En outre, le volume alloué aux ressorts hélicoïdaux étant limité, le débattement angulaire entre les volants d'inertie primaire et secondaire est limité, de telle sorte que les ressorts hélicoïdaux présentent une raideur relativement importante pour une filtration optimale des acyclismes.

Enfin, les ressorts hélicoïdaux sont relativement encombrants dans la direction axiale de telle sorte que, pour un encombrement axial donné, les dimensions axiales des volants, primaire et secondaire, sont parfois sous-dimensionnés. Or, de tels sous-dimensionnements occasionnent des problèmes de tenue mécanique et des difficultés à évacuer les calories générées par le frottement d'un disque d'embrayage contre le volant d'inertie secondaire.

Ainsi, les doubles volants amortisseurs à ressorts hélicoïdaux ne sont pas totalement satisfaisants.

### Objet de l'invention

L'invention vise à remédier à ces problèmes en proposant un double volant amortisseur dont les performances soient accrues et/ou dont la fabrication et l'assemblable soient simplifiés.

A cet effet, et selon un premier aspect, l'invention concerne un double volant amortisseur pour véhicule automobile comportant :
- un volant d'inertie primaire, destiné à être fixé en bout d'un vilebrequin, et un volant d'inertie secondaire, mobiles en rotation l'un par rapport à l'autre autour d'un axe de rotation X;
- des moyens d'amortissement pour transmettre un couple et amortir les acyclismes de rotation entre les volants d'inertie primaire et secondaire, lesdits moyens d'amortissement comportant des organes de frottement agencés pour exercer un couple résistant de frottement entre les volants d'inertie primaire et secondaire, lors d'un débattement angulaire entre lesdits volants d'inertie primaire et secondaire ;
ledit double volant amortisseur étant remarquable en ce que les moyens d'amortissement comportent une lame élastique, solidaire en rotation d'un desdits volants d'inertie primaire et secondaire, et pourvue d'une surface de came ; et en ce que l'amortisseur comporte un suiveur de came, porté par l'autre desdits volants d'inertie primaire et secondaire, et agencé pour coopérer avec ladite surface de came ;
ladite surface de came étant agencée de telle sorte que, pour un débattement angulaire entre le volant d'inertie primaire et le volant d'inertie secondaire par rapport à une position angulaire de repos, le suiveur de came exerce un effort de flexion sur la lame élastique produisant une force de réaction apte à rappeler lesdits volants d'inertie primaire et secondaire vers ladite position angulaire de repos.

Ainsi, la construction et l'assemblage d'un tel double volant amortisseur est simple puisqu'il nécessite un nombre restreint de composants en comparaison avec un double volant amortisseur à ressorts hélicoïdaux.

En outre, les moyens d'amortissement sont moins sensibles à la force centrifuge que les ressorts hélicoïdaux de l'art antérieur de telle sorte que la qualité de l'amortissement des vibrations n'est que peu impacté par la force centrifuge.

De plus, la structure d'un tel double volant amortisseur permet d'obtenir des débattements relatifs importants ce qui permet l'utilisation de moyens d'amortissement présentant une raideur restreinte afin d'en améliorer l'efficacité.

Par ailleurs, un tel double volant amortisseur peut présenter une courbe caractéristique représentant les variations du couple transmis en fonction du débattement angulaire qui présente des variations de pentes sans point d'inflexion ou discontinuité. Ainsi, la courbe caractéristique ne présente pas de zone de changement brusque de raideurs qui provoque des discontinuités et chocs nuisant à la qualité de l'amortissement.

Enfin, la surface de came étant portée par la lame élastique, la fabrication d'un double volant amortisseur selon l'invention peut être en partie standardisée. En effet, seules la géométrie et les caractéristiques de la lame élastique nécessitent des adaptations lorsque les caractéristiques d'un double volant amortisseur doivent être adaptées aux caractéristiques de l'application visée.

Selon d'autres modes de réalisation avantageux, un tel double volant amortisseur peut présenter une ou plusieurs des caractéristiques suivantes :
- le suiveur de came est un galet monté mobile en rotation sur l'autre desdits volants d'inertie primaire et secondaire.
- le galet est monté mobile en rotation sur l'autre desdits volants d'inertie primaire et secondaire par l'intermédiaire d'un palier à roulement.
- le double volant amortisseur comporte une seconde lame élastique pourvue d'une surface de came et un second suiveur de came agencé pour coopérer avec la surface de came de ladite seconde lame élastique, la première et la seconde lames élastiques étant symétriques par rapport à l'axe de rotation X.
- la première et la seconde lames élastiques sont portées par un corps annulaire.
- la première et la seconde lames élastiques sont solidarisées à l'un desdits volants d'inertie primaire et secondaire, chacune de manière indépendante.
- le double volant amortisseur comporte une troisième et une quatrième lames élastiques pourvues d'une surface de came et un troisième et un quatrième suiveurs de came agencés pour coopérer respectivement avec la surface de came de la troisième et de la quatrième lames élastiques.
- la troisième et la quatrième lames élastiques sont portées par un deuxième corps annulaires et sont symétriques par rapport à l'axe de rotation X, le deuxième corps annulaire étant décalées axialement le long de l'axe X par rapport au premier corps annulaire.
- les troisième et quatrième lames élastiques sont décalées angulairement de 90° par rapport aux première et seconde lames élastiques.
- le suiveur de came est disposé radialement à l'extérieur de la lame élastique.
- la surface de came est formée à une extrémité libre de la lame élastique.
- la lame élastique comporte une portion courbe, s'étendant de manière circonférentielle, à l'extrémité libre de laquelle est formée la surface de came.
- la lame élastique est portée par un corps annulaire qui est fixé sur le volant d'inertie primaire, le suiveur de came étant porté par une tige s'étendant entre le volant d'inertie secondaire et un voile, le volant d'inertie secondaire et le voile s'étendant de part et d'autre dudit corps annulaire.
- le volant primaire comporte un moyeu radialement interne supportant un palier de centrage du volant d'inertie secondaire sur le volant d'inertie primaire et une portion annulaire présentant des orifices de passage de vis de fixation dudit double volant amortisseur au nez du vilebrequin d'un moteur, s'étendant radialement au-delà du palier de centrage du volant d'inertie secondaire, le corps annulaire de support de la lame élastique étant pourvue d'orifices de passages desdites vis de fixation du double volant amortisseur sur le nez de vilebrequin.
- la lame élastique est portée par un corps annulaire solidaire du volant secondaire, le volant primaire comportant un moyeu radialement interne supportant un palier à roulement, de centrage du volant d'inertie secondaire par rapport au volant d'inertie primaire, le palier à roulement comportant une bague interne coopérant avec le moyeu radialement interne et une bague externe serrée entre le corps annulaire de support de la lame élastique et le volant d'inertie secondaire.
- les organes de frottement comportent une première rondelle de frottement apte à être entraînée en rotation par l'un des volants d'inertie primaire et secondaire et une seconde rondelle de frottement apte à être entraînée en rotation par l'autre des volants d'inertie primaire et secondaire, et une rondelle élastique de type « Belleville » agencée pour exercer un effort de poussée de la première rondelle de frottement contre la seconde rondelle de frottement.
- le double volant amortisseur comporte des butées de fin de course aptes à limiter le débattement angulaire relatif entre les volants d'inertie primaire et secondaire.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.

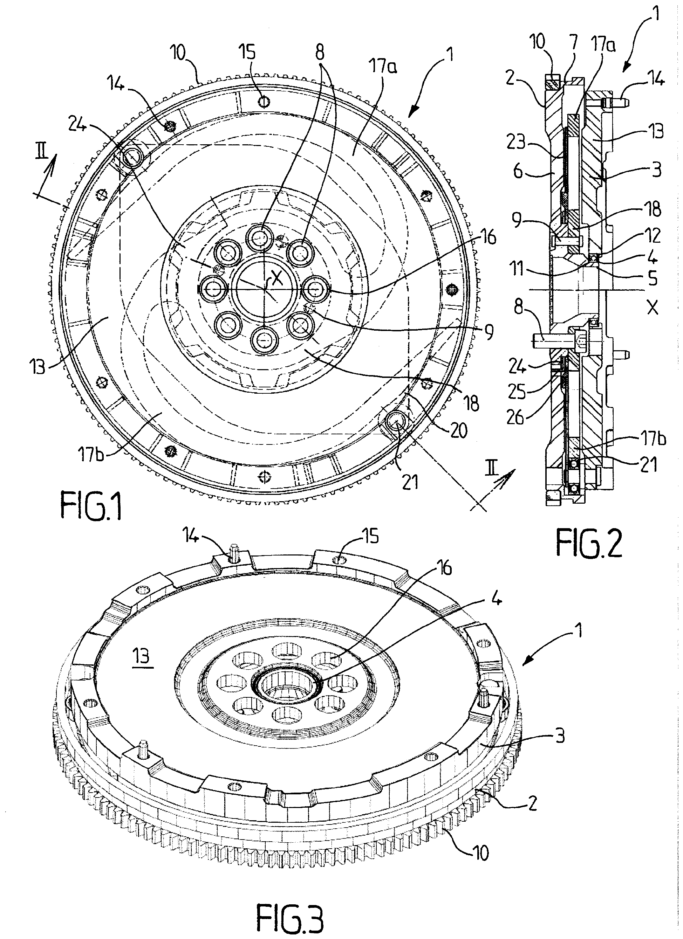

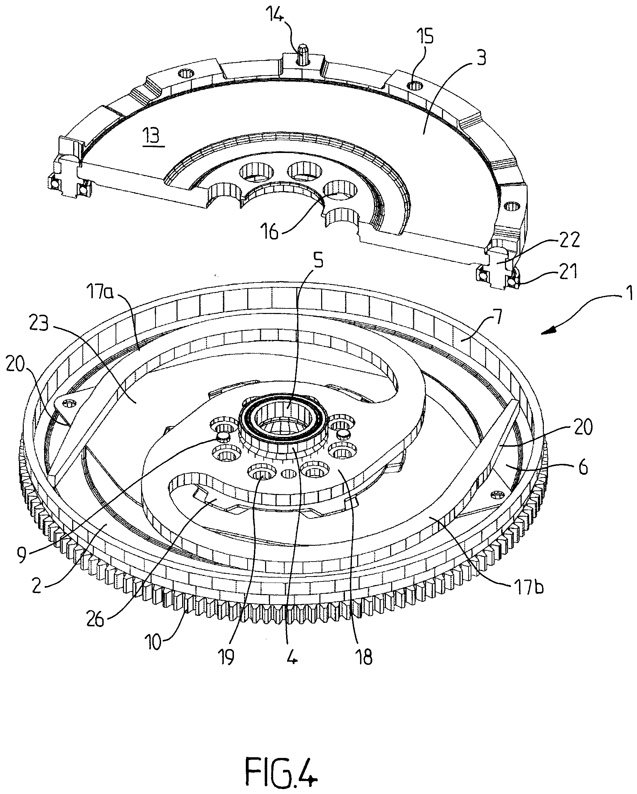

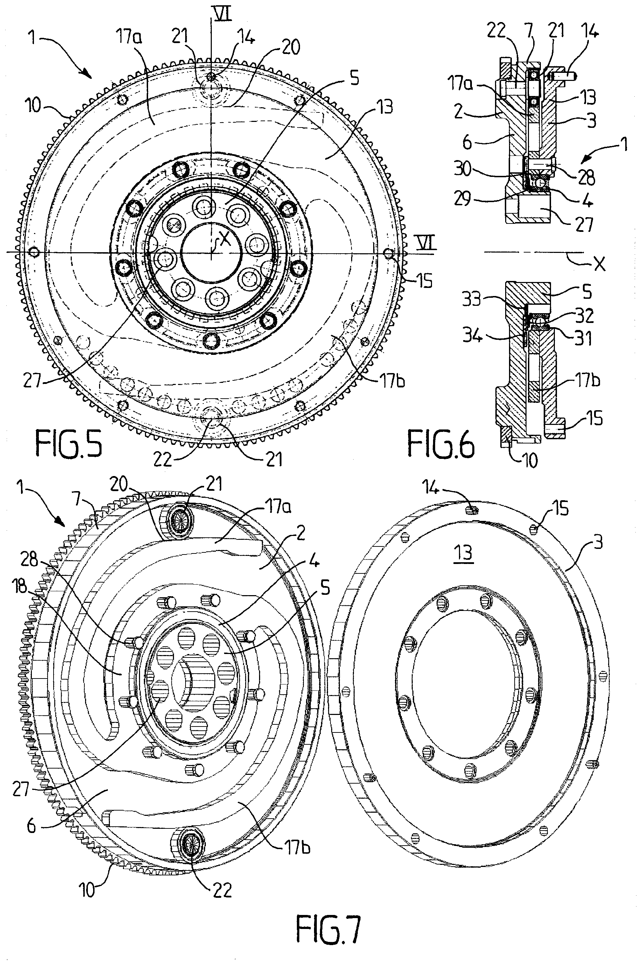

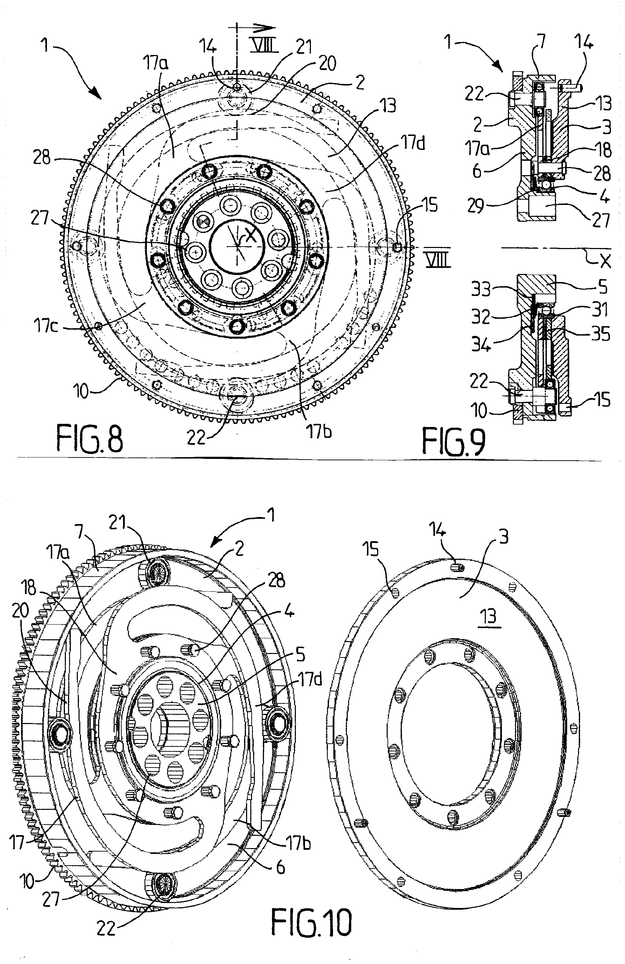

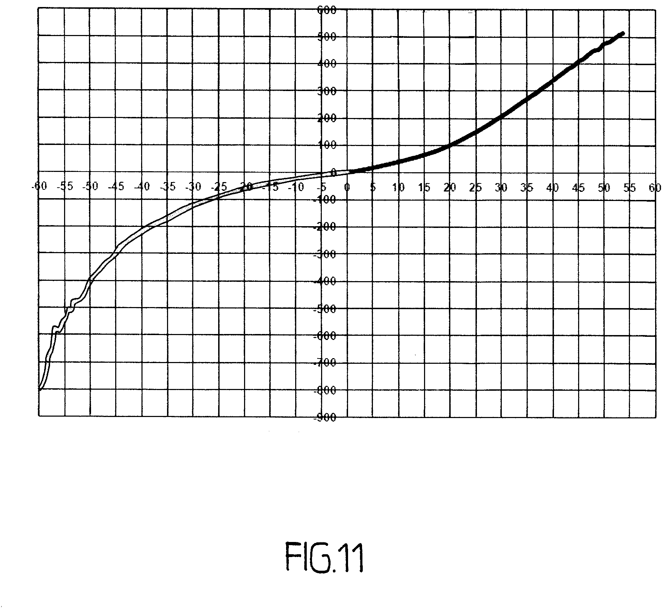

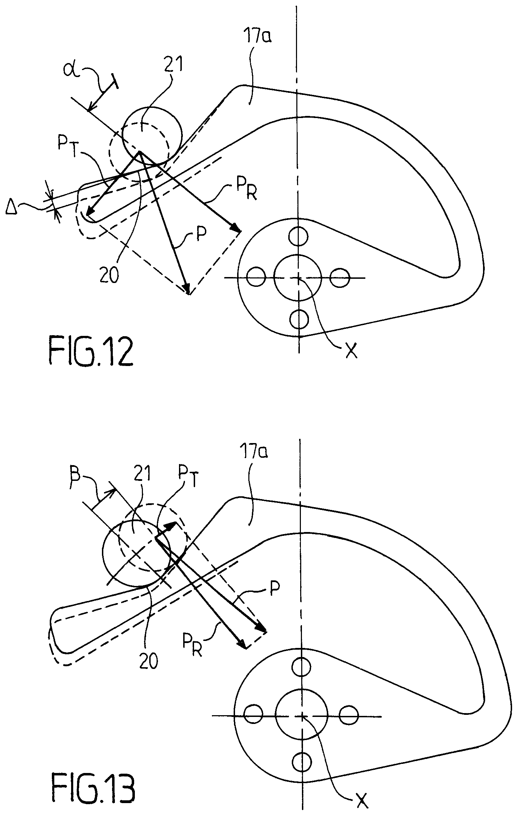

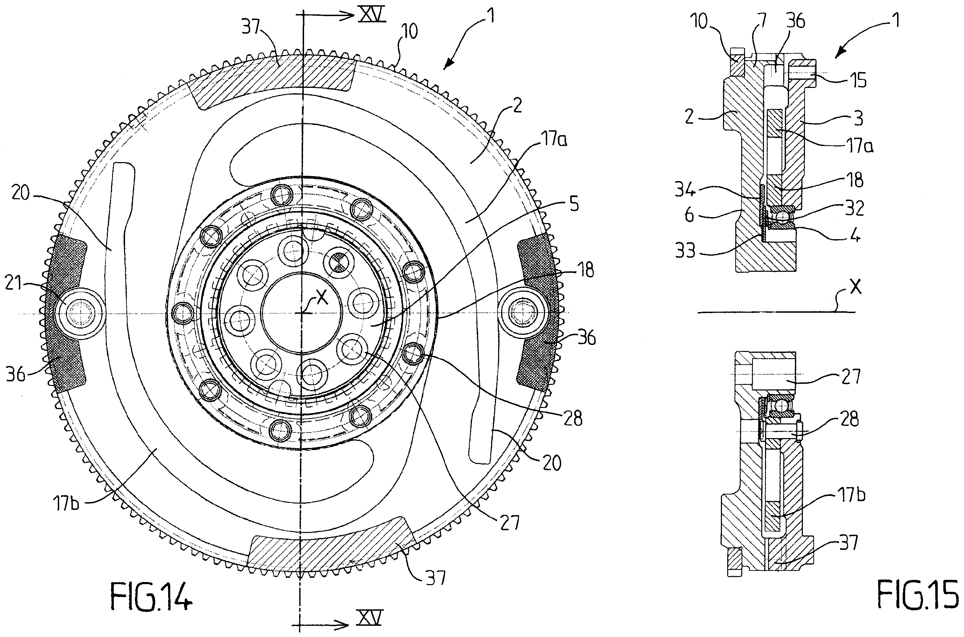

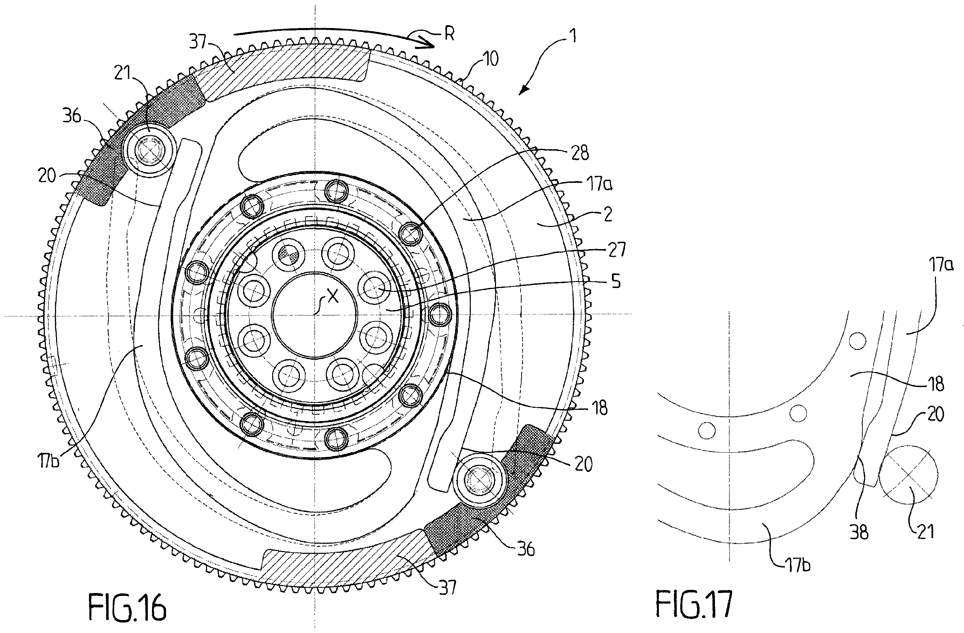

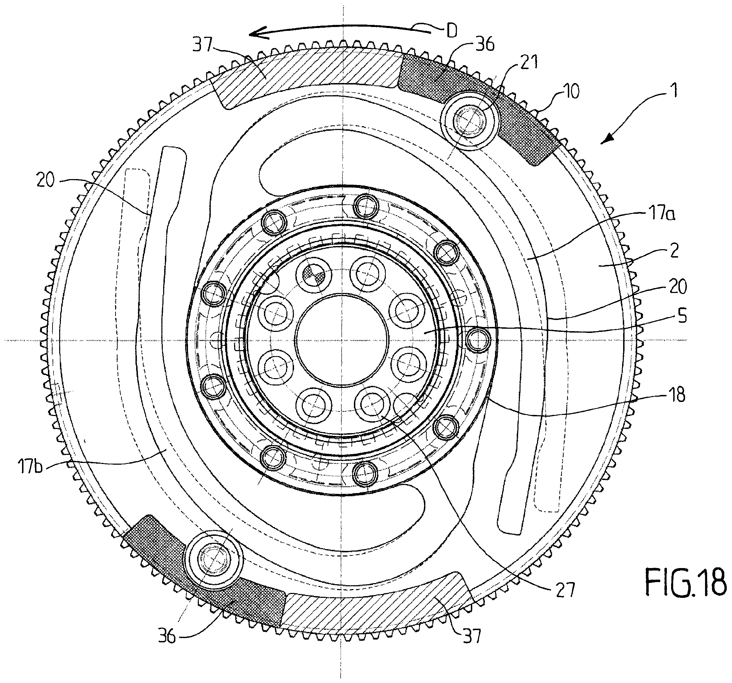

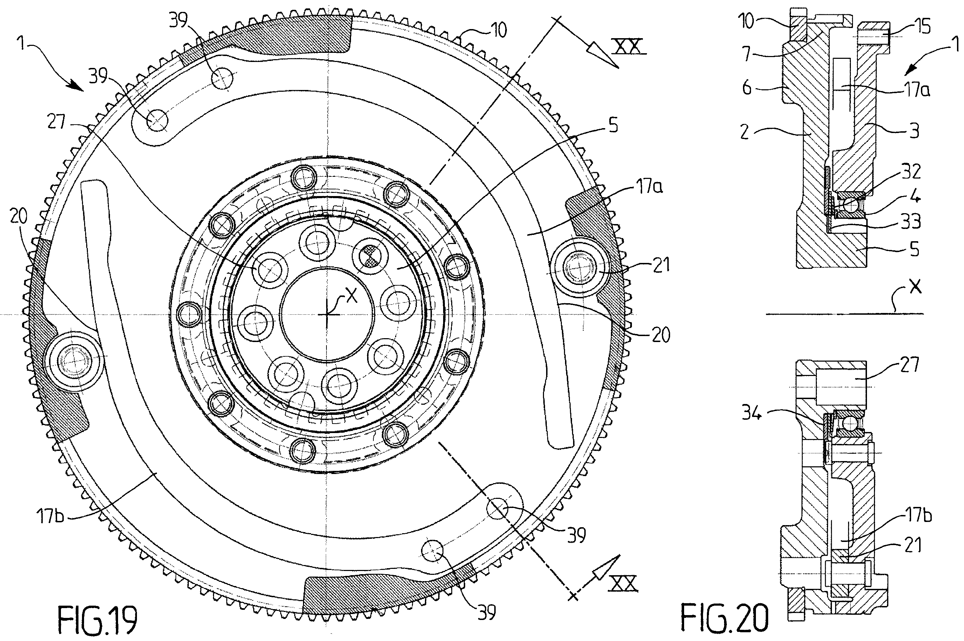

Sur ces figures :
- **La** **figure 1** est une vue de face d'un double volant amortisseur, dans laquelle le volant d'inertie secondaire est représenté, de manière transparente, de sorte à visualiser les moyens d'amortissement.
- **La** **figure 2** est une vue en coupe du double volant amortisseur de la figure 1, selon II-II.
- **La** **figure 3** est une vue en perspective du double volant amortisseur de la figure 1.
- **La** **figure 4** est une vue en perspective du double volant amortisseur des figures 1 à 3, dans laquelle le volant d'inertie secondaire est représenté, partiellement arraché, et désassemblé du volant d'inertie primaire.
- **La** **figure 5** est une vue de face d'un double volant amortisseur selon un second mode de réalisation, dans laquelle le volant d'inertie secondaire est représenté de manière transparente, de sorte à visualiser les moyens d'amortissement.
- **La** **figure 6** est une vue en coupe du double volant amortisseur de la figure 5 selon VI-VI.
- **La** **figure 7** est une vue en perspective, partiellement éclatée, du double volant amortisseur des figures 5 et 6.
- **La** **figure 8** est une vue de face d'un double volant amortisseur selon un troisième mode de réalisation, dans laquelle le volant d'inertie secondaire est représenté, de manière transparente, de sorte à visualiser les moyens d'amortissement.
- **La** **figure 9** est une vue en coupe du double volant amortisseur de la figure 8, selon VIII-VIII.
- **La** **figure 10** est une vue en perspective, partiellement éclatée, du double volant amortisseur des figures 8 et 9.
- **La** **figure 11** est un exemple de courbe caractéristique d'un double volant amortisseur, représentant le couple transmis en fonction du débattement angulaire.
- **La** **figure 12** est une vue schématique des moyens d'amortissement à lame élastique, illustrant le fléchissement de la lame lors d'un débattement angulaire entre les volants d'inertie, primaire et secondaire, dans un sens direct.
- **La** **figure 13** est une vue schématique des moyens d'amortissement à lame élastique, illustrant le fléchissement de la lame lors d'un débattement angulaire entre les volants d'inertie, primaire et secondaire, dans un sens rétro.
- **La** **figure 14** est une vue de face d'un double volant amortisseur selon un quatrième mode de réalisation, dans laquelle une partie du volant d'inertie secondaire n'est pas représentée de sorte à visualiser les moyens d'amortissement et les butées de fin de course.
- **La** **figure 15** est une vue en coupe du double volant amortisseur de la figure 14 selon XV-XV.
- **La** **figure 16** illustre le double volant amortisseur de la figure 14, en position de butée de fin de débattement, lors d'un débattement angulaire du volant d'inertie secondaire par rapport au volant d'inertie primaire, dans le sens rétro.
- **La** **figure 17** illustre des moyens formant butée de fin de débattement selon une variante de réalisation.
- **La** **figure 18** illustre le double volant amortisseur de la figure 14, en position de butée de fin de débattement, lors d'un débattement angulaire du volant d'inertie secondaire par rapport au volant d'inertie primaire, dans le sens direct.
- **La** **figure 19** est une vue de face d'un double volant amortisseur selon un cinquième mode de réalisation, dans laquelle une partie du volant d'inertie secondaire n'est pas représentée de sorte à visualiser les moyens d'amortissement.
- **La** **figure 20** est une vue en coupe du double volant amortisseur de la figure 19 selon un axe XX-XX.

Dans la description et les revendications, on utilisera, les termes "externe" et "interne" ainsi que les orientations "axiale" et "radiale" pour désigner, selon les définitions données dans la description, des éléments du double volant amortisseur. Par convention, l'orientation "radiale" est dirigée orthogonalement à l'axe X de rotation du double volant amortisseur déterminant l'orientation "axiale" et, de l'intérieur vers l'extérieur en s'éloignant dudit axe X, l'orientation "circonférentielle" est dirigée orthogonalement à l'axe X de rotation du double volant amortisseur et orthogonalement à la direction radiale. Les termes "externe" et "interne" sont utilisés pour définir la position relative d'un élément par rapport à un autre, par référence à l'axe X de rotation du double volant amortisseur, un élément proche de l'axe est ainsi qualifié d'interne par opposition à un élément externe situé radialement en périphérie.

On se réfère d'abord aux figures 1 à 4 qui représentent un double volant amortisseur 1 selon un premier mode de réalisation. Le double volant amortisseur 1 comprend un volant d'inertie primaire 2, destiné à être fixé en bout d'un vilebrequin d'un moteur à combustion interne, non représenté, et un volant d'inertie secondaire 3 qui est centré et guidé sur le volant primaire 2 au moyen d'un palier à roulement à billes 4. Le volant secondaire 3 est destiné à former le plateau de réaction d'un embrayage, non représenté, relié à l'arbre d'entrée d'une boîte de vitesse. Les volants d'inertie primaire 2 et secondaire 3 sont destinées à être montés mobiles autour d'un axe de rotation X et sont, en outre, mobiles en rotation l'un par rapport à l'autre autour dudit axe X.

Le volant primaire 2 comporte un moyeu 5 radialement interne supportant le palier à roulement 4, une portion annulaire 6 s'étendant radialement et une portion cylindrique 7 s'étendant axialement, du côté opposé au moteur, depuis la périphérie externe de la portion annulaire 6. La portion annulaire 6 est pourvue, d'une part, d'orifices de passage de vis 8 de fixation, destinés à la fixation du volant primaire 2 sur le vilebrequin du moteur et, d'autre part, d'orifices de passage de rivets 9 pour la fixation des moyens d'amortissement sur le volant primaire 2. Le volant primaire 2 porte, sur sa périphérie extérieure, une couronne dentée 10 pour l'entraînement en rotation du volant primaire 2, à l'aide d'un démarreur.

Le moyeu 5, radialement interne, du volant primaire comporte un épaulement 11, servant à l'appui de la bague interne du palier à roulement 5, qui retient ladite bague interne, en direction du moteur. De même, le volant secondaire 3 comporte sur sa périphérie interne un épaulement 12 servant à l'appui de la bague externe du palier à roulement 5 et retenant ladite bague externe, en direction opposée au moteur.

Le volant secondaire 3 comporte une surface annulaire plane 13, tournée du côté opposé au volant primaire 2, formant une surface d'appui pour une garniture de friction d'un disque d'embrayage, non représentée. Le volant secondaire 3 comporte, à proximité de son bord externe, des plots 14 et des orifices 15 servant au montage d'un couvercle d'embrayage. Le volant secondaire 3 comporte en outre des orifices 16, disposés en vis-à-vis des orifices formés dans le volant primaire 2, et destinés au passage des vis 8, lors du montage du double volant amortisseur 1 sur le vilebrequin.

Les volants primaire 2 et secondaire 3 sont couplés en rotation par des moyens d'amortissement. Dans le mode de réalisation représenté sur les figures 1 à 4, ces moyens d'amortissement comportent deux lames élastiques 17a, 17b montées solidaires en rotation du volant primaire 2. Pour ce faire, les lames élastiques 17a, 17b sont portées par un corps annulaire 18 pourvu d'orifices permettant le passage des rivets 9 de fixation au volant primaire 2. Le corps annulaire 18 comporte en outre des orifices 19 pour le passage des vis 8 de fixation du double volant amortisseur 1 au nez du vilebrequin. Les deux lames élastiques 17a, 17b sont symétriques par rapport à l'axe de rotation X du disque d'embrayage.

Les lames élastiques 17a, 17b présentent, à une extrémité libre, une surface de came 20 qui est agencée pour coopérer avec un suiveur de came, porté par le volant secondaire 3. Les lames élastiques 17a, 17b comportent une portion courbe s'étendant de manière sensiblement circonférentielle. Le rayon de courbure de la portion courbe ainsi que la longueur de cette portion courbe sont déterminés en fonction de la raideur souhaité de la lame élastique 17a, 17b. La lame élastique 17a, 17b peut, au choix, être réalisée d'un seul tenant ou être composée d'une pluralité de lamelles disposées axialement les unes contre les autres.

Les suiveurs de came sont des galets 21 portés par des tiges cylindriques 22 fixées d'une part au volant secondaire 3 et d'autre part à un voile 23. Les galets 21 sont montés mobiles en rotation sur les tiges cylindriques 22 autour d'un axe de rotation parallèle à l'axe de rotation X. Les galets 21 sont maintenus en appui contre leur surface de came 20 respective et sont agencés pour rouler contre ladite surface de came 20 lors d'un mouvement relatif entre les volants primaire 2 et secondaire 3. Les galets 21 sont disposés radialement à l'extérieur de leur surface de came 20 respective de sorte à maintenir radialement les lames élastiques 17a, 17b lorsqu'elles sont soumises à la force centrifuge. De façon à réduire les frottements parasitaires susceptibles d'affecter la fonction d'amortissement, les galets 21 sont avantageusement montés en rotation sur les tiges cylindriques par l'intermédiaire d'un palier à roulement. A titre d'exemple, le palier à roulement pourra être un roulement à billes ou à rouleaux. Dans un mode de réalisation, les galets 21 présentent un revêtement antifriction.

La surface de came 20 est agencée de telle sorte que, pour un débattement angulaire entre le volant primaire 2 et le volant secondaire 3, par rapport à une position angulaire relative de repos, le galet 21 se déplace sur la surface de came 20 et, ce faisant, exerce un effort de flexion sur la lame élastique 17a, 17b. Par réaction, la lame élastique 17a, 17b exerce sur le galet 21 une force de rappel qui tend à ramener les volants primaire 2 et secondaire 3 vers leur position angulaire relative de repos. Ainsi, les lames élastiques 17a, 17b sont aptes à transmettre un couple entraînant du volant primaire 2 vers le volant secondaire 3 (sens direct) et un couple résistant du volant secondaire 3 vers le volant primaire 2 (sens rétro).

Le principe de fonctionnement de moyens d'amortissement à lame élastique 17a est détaillé en relation avec les figures 12 et 13.

Lorsqu'un couple moteur entraînant est transmis du volant primaire 2 vers le volant secondaire 3 (sens direct), le couple à transmettre entraîne un débattement relatif entre le volant primaire 2 et le volant secondaire 3 selon une première direction (voir figure 12). Le galet 21 est alors déplacé d'un angle α par rapport à la lame élastique 17a. Le déplacement du galet 21 sur la surface de came 20 entraîne une flexion de la lame élastique 17a selon une flèche Δ. Pour illustrer la flexion de la lame élastique 17a, la lame élastique 17a est représentée en traits pleins dans sa position angulaire de repos et en traits pointillés lors d'un débattement angulaire.

L'effort de flexion P dépend notamment de la géométrie de la lame élastique 17a et de sa matière, en particulier de son module d'élasticité transversal. L'effort de flexion P se décompose en une composante radiale Pr et en une composante tangentielle Pt. La composante tangentielle Pt permet la transmission du couple moteur. En réaction, la lame élastique 17a exerce sur le galet 21 une force de réaction dont la composante tangentielle constitue une force de rappel qui tend à ramener les volants primaire 2 et secondaire 3 vers leur position angulaire relative de repos.

Lorsqu'un couple résistant est transmis du volant secondaire 3 vers le volant primaire 2 (sens rétro), le couple à transmettre entraîne un débattement relatif entre le volant primaire 2 et le volant secondaire 3 selon une seconde direction opposée (voir figure 13). Le galet 21 est alors déplacé d'un angle β par rapport à la lame élastique 17a. Dans ce cas, la composante tangentielle Pt de l'effort de flexion présente une direction opposée à la composante tangentielle de l'effort de flexion illustré sur la figure 12. De même, la lame élastique 17a exerce une force de réaction, de direction contraire à celle illustrée sur la figure 12, de sorte à ramener les volants primaire 2 et secondaire 3 vers leur position angulaire relative de repos.

Les vibrations de torsion et les irrégularités de couple qui sont produites par le moteur à combustion interne sont transmises par l'arbre de vilebrequin au volant primaire 2 et génèrent des rotations relatives entre les volants primaire 2 et secondaire 3. Ces vibrations et irrégularités sont amorties par la flexion de la lame élastique 17a.

En se reportant de nouveau aux figures 1 à 4, on constate que les moyens d'amortissements comportent des organes de frottement agencés pour exercer un couple résistant entre le volant primaire 2 et le volant secondaire 3 lors de leur débattement relatif. Ainsi, les organes de frottement sont aptes à dissiper l'énergie accumulée dans les lames élastiques 17a, 17b. Les organes de frottement comportent une rondelle élastique 24, du type rondelle de « Belleville », une première rondelle de frottement 25 solidarisée en rotation au volant primaire 2 et une seconde rondelle de frottement 26 apte à être entraînée en rotation par rapport au volant primaire 2, lors d'un débattement relatif entre les volants primaire 2 et secondaire 3. La rondelle élastique 24 est intercalée entre le volant primaire 2 et la première rondelle de frottement 25 et assure un effort de poussée de la première rondelle de frottement 25 contre la seconde rondelle de frottement 26. La première rondelle de frottement 25 est solidarisée en rotation au volant primaire 2 par des doigts axiaux, représentés sur la figure 2, emboités dans des ouvertures ménagés dans le volant primaire 2. La seconde rondelle de frottement 26 comporte sur sa périphérie externe une denture engrenant, avec un jeu circonférentiel déterminé, avec une denture formée dans la périphérie interne du voile 23. Ainsi, lorsque le jeu circonférentiel est rattrapé, lors d'un débattement relatif entre le volant primaire 2 et le volant secondaire 3, la seconde rondelle de frottement 26 est entraînée en rotation avec le volant secondaire 3 et un couple de frottement s'exerce entre la première et la seconde rondelles de frottement 25, 26.

Les figures 5 à 7 illustrent un double volant amortisseur 1 selon un seconde mode de réalisation. Dans ce mode de réalisation, le volant primaire 2 comporte un moyeu radialement interne 5, supportant un roulement de centrage 4 du volant secondaire 3, qui est pourvu d'orifices 27 pour le passage de vis, pour la fixation du double volant amortisseur 1 au nez du vilebrequin.

Les moyens d'amortissement comportent deux lames élastiques 17a, 17b qui sont ici montées solidaires en rotation du volant secondaire 3 et qui portent des surfaces de came 20, agencées pour coopérer avec des suiveurs de came portés par le volant primaire 2. Les lames élastiques 17a, 17b sont portées par un corps annulaire 18. Ledit corps annulaire 18 est fixé sur le volant primaire 2 par l'intermédiaire d'une pluralité de rivets 28 coopérant avec des orifices ménagés dans le corps annulaire 18 et dans le volant primaire 2.

Le moyeu 5, radialement interne, du volant primaire 2, comporte un épaulement 29 servant à l'appui de la bague interne du palier à roulement 5 et retenant ladite bague interne, en direction du moteur. Par ailleurs, la bague externe du palier de roulement 5 est serrée entre le corps annulaire 18, de support des lames élastiques 17a, 17b, et le volant secondaire 3. Pour ce faire, le corps annulaire 18 présente, sur sa périphérie interne, un épaulement 30 retenant la bague externe en direction du moteur et le volant secondaire 3 comporte, sur sa périphérie interne, un épaulement 31 retenant la bague externe, en direction opposée au moteur.

Les suiveurs de came sont ici des galets 21, montés mobiles en rotation, sur le volant primaire 2, autour d'un axe parallèle à l'axe de rotation X. Les galets 21 sont montés sur des tiges cylindriques 22, fixées sur le volant primaire 2, par l'intermédiaire de paliers à roulement.

Par ailleurs, les moyens d'amortissement du double volant amortisseur des figures 5 à 7, comportent également des organes de frottement agencés pour exercer un couple résistant entre le volant primaire 2 et le volant secondaire 3 lors de leur débattement relatif. Les organes de frottement comportent une rondelle élastique, de « type Belleville » 32, une première rondelle de frottement 33, solidaire en rotation du volant primaire 2 et une seconde rondelle de frottement 34 apte à être entrainée en rotation par rapport au volant primaire 2 lors d'un débattement relatif entre les volants primaire 2 et secondaire 3. La rondelle élastique 32 est calée axialement en direction opposée au moteur par un circlip. La rondelle élastique 32 exerce un effort axial sur la première rondelle de frottement 33 qui pince la seconde rondelle de frottement 34 entre ladite première rondelle de frottement 33 et le volant primaire 2. La première rondelle de frottement 33 présente sur sa périphérie interne des pattes coopérant avec des rainures ménagées sur la périphérie externe du moyeu 5 du volant primaire 2, de sorte à solidariser en rotation la première rondelle de frottement 33 avec le volant primaire 2. La seconde rondelle de frottement 34 présente, quant à elle, sur sa périphérie externe des échancrures aptes à coopérer, avec un jeu circonférentiel déterminé, avec les têtes des rivets 28 de fixation du corps annulaire 18 au volant secondaire 3, de sorte à permettre un mouvement relatif de la seconde rondelle de frottement 34 par rapport au volant primaire 2, lors d'un débattement relatif entre les volants primaire 2 et secondaire 3.

Les figures 8 à 10 illustrent un double volant amortisseur 1 selon un troisième mode de réalisation. Ce double volant amortisseur 1 est sensiblement similaire au double volant amortisseur 1 des figures 5 à 7 à l'exception des moyens d'amortissements qui comportent ici deux paires de lames élastiques 17a, 17b, 17c, 17c. Une première paire de lames élastiques 17a, 17b est portée par un premier corps annulaire 18 et une seconde paire de lames élastiques 17c, 17d est portée par un second corps annulaire 18. Les lames élastiques 17a, 17b, 17c, 17d sont, par paire, symétriques par rapport à l'axe de rotation X. Le premier et le second corps annulaires 18 sont fixés au volant secondaire 3 via une pluralité de rivets 28. Un anneau d'entretoise 35 est ici positionné axialement entre le premier et le second corps annulaires 18.

Dans le mode de réalisation représenté, les deux corps annulaires 18 et les deux paires de lames élastiques 17a, 17b, 17c, 17d sont identiques. Les lames élastiques 17a, 17b, 17c, 17d de l'une des paires de lames élastiques sont décalées angulairement de 90° par rapport aux lames élastiques de l'autre paire. Un tel agencement permet de répartir plus régulièrement les efforts s'exerçant sur le palier à roulement 4.

Les suiveurs de came comportent ici deux paires de galets 21, montés mobiles en rotation sur des tiges cylindrique 22, fixées au volant primaire 2.

Les figures 14 à 18 illustrent un double volant amortisseur 1 selon un quatrième mode de réalisation. Ce double volant amortisseur 1 est sensiblement similaire au double volant amortisseur 1 des figures 5 à 7 mais comporte, en outre, des butées 36, 37 de fin de course aptes à limiter le débattement angulaire relatif entre le volant d'inertie primaire 2 et le volant d'inertie secondaire 3. De telles butées permettent de transmettre un couple entre le volant d'inertie primaire 2 et le volant d'inertie secondaire 3, en cas de destructions des moyens d'amortissement, ou permettent de protéger les moyens d'amortissement en cas de transmission d'un sur-couple résultant de conditions d'utilisation limites ou d'un dysfonctionnement du groupe motopropulseur.

Dans le mode de réalisation représenté, les butées 36, 37 sont constituées d'éléments en saillie formées dans la masse des volants d'inertie primaire 2 et secondaire 3. De manière alternative, les butées 36, 37 peuvent être constituées de pièces rapportées, par rivetage par exemple, sur les volants d'inertie primaire 2 et secondaire 3.

Dans le mode de réalisation des figures 14, 15, 16 et 18, chacun des volants d'inertie primaire comporte deux butées 36, 37 disposées de manière diamétralement opposée. De telles butées 36, 37 sont donc à action bidirectionnelle. Lors d'une rotation relative du volant d'inertie secondaire 3 dans un sens retro R par rapport au volant d'inertie primaire 2, une première surface d'appui des butées 37 portées par le volant secondaire 3 vient en appui contre une première surface d'appui des butées 36 portées par le volant primaire 2, tel qu'illustré sur la figure 14. A contrario, lors d'une rotation relative du volant d'inertie secondaire 3 dans un sens direct D par rapport au volant d'inertie primaire 2, une seconde surface d'appui des butées 37 portées par le volant secondaire 3 vient en appui contre une seconde surface d'appui des butées 36 portées par le volant primaire 2, tel qu'illustré sur la figure 18.

Dans la variante de réalisation illustrée sur la figure 17, la butée de fin de course est formée par l'appui d'une lame élastique 17b contre une surface de butée 38, portée par le corps annulaire 18 ou par une autre lame élastique 17a. Dans ce cas, la surface de came 20 de la lame élastique 17a, 17 est agencée de telle sorte que la lame élastique 17a vient en butée contre la surface de butée 38 pour un débattement angulaire relatif donné.

Les figures 19 et 20 illustrent un double volant amortisseur 1 selon un cinquième mode de réalisation. Ce double volant amortisseur 1 est également proche du double volant amortisseur décrit en relation avec les figures 5 à 7. Ce double volant amortisseur diffère, toutefois, de celui-ci en ce qu'il comporte deux lames élastiques qui sont fixées de manière indépendante sur le volant d'inertie primaire 2, comme sur les figures 19 et 20, ou sur le volant d'inertie secondaire 3, non représenté. Les lames élastiques 17a, 17b sont ici fixées sur la masse d'inertie primaire 2 au moyen de rivets 39. Un tel agencement permet de simplifier la fabrication des lames élastiques 17a, 17b.

La figure 11 illustre une courbe caractéristique d'un double volant amortisseur 1 réalisé conformément aux enseignements de l'invention. Cette courbe caractéristique représente le couple transmis, exprimé en N.m, en fonction du débattement angulaire, exprimé en degré. Le débattement relatif entre les éléments d'entrée et de sortie, dans le sens direct, est représenté en traits pointillés alors que le débattement, dans le sens rétro est représenté en traits pleins. On note qu'un tel double volant amortisseur 1 permet notamment d'obtenir des courbes caractéristiques d'amortissement dont la pente varie progressivement, sans discontinuité.

De manière avantageuse, les surfaces de came 20 et les lames élastiques 17a, 17b, 17c, 17d sont agencées de telle sorte que la fonction caractéristique du couple transmis en fonction du débattement angulaire est une fonction monotone.

Pour certaines applications, les surfaces de came 20 et les lames élastiques 17a, 17b, 17c, 17d pourront être agencées de telle sorte que les caractéristiques du couple transmis en fonction du débattement angulaire, dans le sens rétro et dans le sens direct soient symétriques par rapport à la position angulaire de repos.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Double volant amortisseur (1) pour véhicule automobile comportant :
- un volant d'inertie primaire (2), destiné à être fixé en bout d'un vilebrequin, et un volant d'inertie secondaire (3), mobiles en rotation l'un par rapport à l'autre autour d'un axe de rotation X;
- des moyens d'amortissement pour transmettre un couple et amortir les acyclismes de rotation entre les volants d'inertie primaire (2) et secondaire (3), lesdits moyens d'amortissement comportant des organes de frottement (24, 25, 26 ; 32, 33, 34) agencés pour exercer un couple résistant de frottement entre les volants d'inertie primaire (2) et secondaire (3), lors d'un débattement angulaire entre lesdits volants d'inertie primaire (2) et secondaire (3) ;
ledit double volant amortisseur (1) étant **caractérisé en ce que** les moyens d'amortissement comportent une lame élastique (17a, 17b, 17c, 17d), solidaire en rotation d'un desdits volants d'inertie primaire (2) et secondaire (3), et pourvue d'une surface de came (20); et **en ce que** l'amortisseur comporte un suiveur de came (21), porté par l'autre desdits volants d'inertie primaire (2) et secondaire (3), et agencé pour coopérer avec ladite surface de came (20) ; ladite surface de came (20) étant agencée de telle sorte que, pour un débattement angulaire entre le volant d'inertie primaire (2) et le volant d'inertie secondaire (3) par rapport à une position angulaire de repos, le suiveur de came (21) exerce un effort de flexion sur la lame élastique (17a, 17b, 17c, 17d) produisant une force de réaction apte à rappeler lesdits volants d'inertie primaire (2) et secondaire (3) vers ladite position angulaire de repos.

2. Double volant amortisseur (1) selon la revendication 1, dans lequel le suiveur de came est un galet (21) monté mobile en rotation sur l'autre desdits volants d'inertie primaire (2) et secondaire (3).

3. Double volant amortisseur (1) selon la revendication 2, dans lequel le galet (21) est monté mobile en rotation sur l'autre desdits volants d'inertie primaire (2) et secondaire (3) par l'intermédiaire d'un palier à roulement.

4. Double volant amortisseur (1) selon l'une quelconque des revendications 1 à 3, comportant une seconde lame élastique (17a, 17b, 17c, 17d) pourvue d'une surface de came (20) et un second suiveur de came (21) agencé pour coopérer avec la surface de came (20) de ladite seconde lame élastique (17a, 17b, 17c, 17d), la première et la seconde lames élastiques (17a, 17b, 17c, 17d) étant symétriques par rapport à l'axe de rotation X.

5. Double volant amortisseur (1) selon la revendication 4, dans lequel la première et la seconde lames élastiques (17a, 17b, 17c, 17d) sont portées par un corps annulaire.

6. Double volant amortisseur (1) selon la revendication 4, dans lequel la première et le seconde lame élastiques (17a, 17b) sont solidarisées à l'un desdits volants d'inertie primaire (2) et secondaire (3) de manière indépendante.

7. Double volant amortisseur (1) selon la revendication 5, comportant une troisième et une quatrième lames élastiques (17a, 17b, 17c, 17d) pourvues d'une surface de came (20) et un troisième et un quatrième suiveurs de came (21) agencés pour coopérer respectivement avec la surface de came (20) de la troisième et de la quatrième lames élastiques.

8. Double volant amortisseur (1) selon la revendication 7, dans lequel la troisième et la quatrième lames élastiques (17a, 17b, 17c, 17d) sont portées par un deuxième corps annulaires (18) et sont symétriques par rapport à l'axe de rotation X, le deuxième corps annulaire (18) étant décalées axialement le long de l'axe X par rapport au premier corps annulaire (18).

9. Double volant amortisseur (1) selon la revendication 8, dans lequel les troisième et quatrième lames élastiques (17a, 17b ; 17c, 17d) sont décalées angulairement de 90° par rapport aux première et seconde lames élastiques (17c, 17d ; 17a, 17b).

10. Double volant amortisseur selon l'une des revendications 1 à 9, dans lequel le suiveur de came (21) est disposé radialement à l'extérieur de la lame élastique (17a, 17b ; 17c, 17d).

11. Double volant amortisseur (1) selon l'une des revendications 1 à 10, dans lequel la surface de came (20) est formée à une extrémité libre de la lame élastique (17a, 17b ; 17c, 17d).

12. Double volant amortisseur (1) selon la revendication 11, dans lequel la lame élastique (17a, 17b ; 17c, 17d) comporte une portion courbe, s'étendant de manière circonférentielle, à l'extrémité libre de laquelle est formée la surface de came (20).

13. Double volant amortisseur (1) selon l'une quelconque des revendications 1 à 12, dans lequel la lame élastique (17a, 17b ; 17c, 17d) est portée par un corps annulaire (18) qui est fixé sur le volant d'inertie primaire (2), le suiveur de came (21) étant porté par une tige (22) s'étendant entre le volant d'inertie secondaire (3) et un voile (23), le volant d'inertie secondaire (3) et le voile (23) s'étendant de part et d'autre dudit corps annulaire (18).

14. Double volant amortisseur (1) selon la revendication 13, dans lequel le volant primaire (2) comporte un moyeu (5) radialement interne supportant un palier de centrage (4) du volant d'inertie secondaire (3) sur le volant d'inertie primaire (2) et une portion annulaire (6) présentant des orifices de passage de vis (9) de fixation dudit double volant amortisseur (1) au nez du vilebrequin d'un moteur, s'étendant radialement au-delà du palier de centrage (4), le corps annulaire (18) de support de la lame élastique (17a, 17b ; 17c, 17d) étant pourvue d'orifices (19) de passages desdites vis de fixation (9) du double volant amortisseur (1) sur le nez de vilebrequin.

15. Double volant amortisseur (1) selon l'une quelconque des revendications 1 à 14, dans lequel la lame élastique (17a, 17b ; 17c, 17d) est portée par un corps annulaire (18) solidaire du volant secondaire (3), le volant primaire (2) comportant un moyeu (5) radialement interne, supportant un palier à roulement (5) de centrage du volant d'inertie secondaire (3) par rapport au volant d'inertie primaire (2), le palier à roulement (5) comportant une bague interne coopérant avec le moyeu (5) radialement interne et une bague externe serrée entre le corps annulaire (18) de support de la lame élastique (17a, 17b ; 17c, 17d) et le volant d'inertie secondaire (3).

16. Double volant amortisseur (1) selon l'une quelconque des revendications 1 à 15, dans lequel les organes de frottement comportent une première rondelle de frottement (24, 32) apte à être entraînée en rotation par l'un des volants d'inertie primaire (2) et secondaire (3) et une seconde rondelle de frottement (25, 34) apte à être entraînée en rotation par l'autre des volants d'inertie primaire (2) et secondaire (3), et une rondelle élastique (24, 32) de type « Belleville » agencée pour exercer un effort de poussée de la première rondelle de frottement (24, 32) contre la seconde rondelle de frottement (25, 34).

17. Double volant amortisseur selon l'une quelconque des revendications 1 à 16, comportant des butées (36, 37) de fin de course aptes à limiter le débattement angulaire relatif entre les volants d'inertie primaire (2) et secondaire (3).

## Patentansprüche

1. Zweimassenschwungrad (1) für ein Kraftfahrzeug, umfassend:
- ein primäres Schwungrad (2), das dazu bestimmt ist, am Ende einer Kurbelwelle befestigt zu werden, und ein sekundäres Schwungrad (3), die relativ zueinander drehbeweglich um eine Drehachse X sind;
- Dämpfungsmittel zum Übertragen eines Drehmoments und Dämpfen der Drehungleichförmigkeiten zwischen dem primären (2) und dem sekundären Schwungrad (3), wobei die Dämpfungsmittel Reibungsorgane (24, 25, 26; 32, 33, 34) aufweisen, die dafür ausgelegt sind, bei einem Winkelausschlag zwischen dem primären (2) und dem sekundären Schwungrad (3) ein Reibungswiderstandsmoment zwischen dem primären (2) und dem sekundären Schwungrad (3) auszuüben;
wobei das Zweimassenschwungrad (1) **dadurch gekennzeichnet ist, dass** die Dämpfungsmittel eine elastische Zunge (17a, 17b, 17c, 17d) aufweisen, die mit dem einem von dem primären (2) und dem sekundären Schwungrad (3) drehfest verbunden ist und mit einer Nockenfläche (20) versehen ist; und dadurch, dass der Dämpfer einen Nockenfolger (21) aufweist, der von dem anderen von dem primären (2) und dem sekundären Schwungrad (3) getragen wird und dafür ausgelegt ist, mit der Nockenfläche (20) zusammenzuwirken;
wobei die Nockenfläche (20) derart ausgebildet ist, dass für einen Winkelausschlag zwischen dem primären Schwungrad (2) und dem sekundären Schwungrad (3) in Bezug auf eine Ruhewinkelposition der Nockenfolger (21) eine Biegekraft auf die elastische Zunge (17a, 17b, 17c, 17d) ausübt, welche eine Gegenkraft erzeugt, die in der Lage ist, das primäre (2) und das sekundäre Schwungrad (3) in die Ruhewinkelposition zurückzubewegen.

2. Zweimassenschwungrad (1) nach Anspruch 1, wobei der Nockenfolger eine Rolle (21) ist, die drehbeweglich auf dem anderen von dem primären (2) und dem sekundären Schwungrad (3) angebracht ist.

3. Zweimassenschwungrad (1) nach Anspruch 2, wobei die Rolle (21) über ein Wälzlager drehbeweglich auf dem anderen von dem primären (2) und dem sekundären Schwungrad (3) gelagert ist.

4. Zweimassenschwungrad (1) nach einem der Ansprüche 1 bis 3, welches eine zweite elastische Zunge (17a, 17b, 17c, 17d), die mit einer Nockenfläche (20) versehen ist, und einen zweiten Nockenfolger (21), der dafür ausgelegt ist, mit der Nockenfläche (20) der zweiten elastischen Zunge (17a, 17b, 17c, 17d) zusammenzuwirken, aufweist, wobei die erste und die zweite elastische Zunge (17a, 17b, 17c, 17d) symmetrisch bezüglich der Drehachse X sind.

5. Zweimassenschwungrad (1) nach Anspruch 4, wobei die erste und die zweite elastische Zunge (17a, 17b, 17c, 17d) von einem ringförmigen Körper getragen werden.

6. Zweimassenschwungrad (1) nach Anspruch 4, wobei die erste und die zweite elastische Zunge (17a, 17b) mit dem einen von dem primären (2) und dem sekundären Schwungrad (3) auf unabhängige Weise verbunden sind.

7. Zweimassenschwungrad (1) nach Anspruch 5, welches eine dritte und eine vierte elastische Zunge (17a, 17b, 17c, 17d), die mit einer Nockenfläche (20) versehen sind, und einen dritten und einen vierten Nockenfolger (21), die dafür ausgelegt sind, mit der Nockenfläche (20) der dritten bzw. der vierten elastischen Zunge zusammenzuwirken, aufweist.

8. Zweimassenschwungrad (1) nach Anspruch 7, wobei die dritte und die vierte elastische Zunge (17a, 17b, 17c, 17d) von einem zweiten ringförmigen Körper (18) getragen werden und symmetrisch bezüglich der Drehachse X sind, wobei der zweite ringförmige Körper (18) in Bezug auf den ersten ringförmigen Körper (18) entlang der Achse X axial versetzt ist.

9. Zweimassenschwungrad (1) nach Anspruch 8, wobei die dritte und die vierte elastische Zunge (17a, 17b; 17c, 17d) in Bezug auf die erste und die zweite elastische Zunge (17c, 17d; 17a, 17b) um 90° winkelversetzt sind.

10. Zweimassenschwungrad nach einem der Ansprüche 1 bis 9, wobei der Nockenfolger (21) radial außerhalb der elastischen Zunge (17a, 17b; 17c, 17d) angeordnet ist.

11. Zweimassenschwungrad (1) nach einem der Ansprüche 1 bis 10, wobei die Nockenfläche (20) an einem freien Ende der elastischen Zunge (17a, 17b; 17c, 17d) ausgebildet ist.

12. Zweimassenschwungrad (1) nach Anspruch 11, wobei die elastische Zunge (17a, 17b; 17c, 17d) einen gekrümmten Abschnitt aufweist, der sich in Umfangsrichtung erstreckt und an dessen freiem Ende die Nockenfläche (20) ausgebildet ist.

13. Zweimassenschwungrad (1) nach einem der Ansprüche 1 bis 12, wobei die elastische Zunge (17a, 17b; 17c, 17d) von einem ringförmigen Körper (18) getragen wird, welcher an dem primären Schwungrad (2) befestigt ist, wobei der Nockenfolger (21) von einer Stange (22) getragen wird, die sich zwischen dem sekundären Schwungrad (3) und einer Abdeckung (23) erstreckt, wobei sich das sekundäre Schwungrad (3) und die Abdeckung (23) beiderseits des ringförmigen Körpers (18) erstrecken.

14. Zweimassenschwungrad (1) nach Anspruch 13, wobei das primäre Schwungrad (2) eine radial innere Nabe (5), die ein Lager zur Zentrierung (4) des sekundären Schwungrades (3) auf dem primären Schwungrad (2) trägt, und einen ringförmigen Abschnitt (6), der Öffnungen zum Durchführen von Schrauben (9) zur Befestigung des Zweimassenschwungrades (1) an der Nase der Kurbelwelle eines Motors aufweist und sich radial außerhalb des Lagers zur Zentrierung (4) erstreckt, umfasst, wobei der ringförmige Körper (18) zur Abstützung der elastischen Zunge (17a, 17b; 17c, 17d) mit Öffnungen (19) zur Durchführung der Schrauben zur Befestigung (9) des Zweimassenschwungrades (1) auf der Nase der Kurbelwelle versehen ist.

15. Zweimassenschwungrad (1) nach einem der Ansprüche 1 bis 14, wobei die elastische Zunge (17a, 17b; 17c, 17d) von einem ringförmigen Körper (18) getragen wird, der mit dem sekundären Schwungrad (3) fest verbunden ist, wobei das primäre Schwungrad (2) eine radial innere Nabe (5) umfasst, die ein Wälzlager (5) zur Zentrierung des sekundären Schwungrades (3) in Bezug auf das primäre Schwungrad (2) trägt, wobei das Wälzlager (5) einen Innenring, der mit der radial inneren Nabe (5) zusammenwirkt, und einen Außenring, der zwischen dem ringförmigen Körper (18) zur Abstützung der elastischen Zunge (17a, 17b; 17c, 17d) und dem sekundären Schwungrad (3) eingespannt ist, aufweist.

16. Zweimassenschwungrad (1) nach einem der Ansprüche 1 bis 15, wobei die Reibungsorgane eine erste Reibscheibe (24, 32), die durch das eine von dem primären (2) und dem sekundären Schwungrad (3) drehend antreibbar ist, und eine zweite Reibscheibe (25, 34), die durch das andere von dem primären (2) und dem sekundären Schwungrad (3) drehend antreibbar ist, und eine elastische Scheibe (24, 32) vom Typ einer Tellerfeder, die dafür ausgelegt ist, eine Schubkraft von der ersten Reibscheibe (24, 32) auf die zweite Reibscheibe (25, 34) auszuüben, umfasst.

17. Zweimassenschwungrad nach einem der Ansprüche 1 bis 16, welches Endanschläge (36, 37) aufweist, die geeignet sind, die relative Winkelbewegung zwischen dem primären (2) und dem sekundären Schwungrad (3) zu begrenzen.

## Claims

1. Dual mass flywheel (1) for motor vehicles, including:
- a primary flywheel (2), designed to be fixed to the end of a crankshaft, and a secondary flywheel (3), mobile in rotation relative to each other about a rotation axis X;
- damping means for transmitting a torque and damping irregularities of rotation between the primary flywheel (2) and the secondary flywheel (3), said damping means including friction members (24, 25, 26; 32, 33, 34) adapted to exert a resisting friction torque between the primary flywheel (2) and the secondary flywheel (3) on relative angular movement between said primary flywheel (2) and said secondary flywheel (3);
said dual mass flywheel (1) being **characterized in that** the damping means include a leaf spring (17a, 17b, 17c, 17d) constrained to rotate with either said primary flywheel (2) or said secondary flywheel (3) and having a cam surface (20) and **in that** the damper includes a cam follower (21) carried by the other of said primary flywheel (2) and said secondary flywheel (3) and adapted to cooperate with said cam surface (20);
said cam surface (20) being such that, for a relative angular movement between the primary flywheel (2) and the secondary flywheel (3) relative to a rest angular position, the cam follower (21) exerts a bending force on the leaf spring (17a, 17b, 17c, 17d) producing a reaction force adapted to return said primary flywheel (2) and said secondary flywheel (3) to said rest angular position.

2. Dual mass flywheel (1) according to Claim 1, wherein the cam follower is a roller (21) mounted to be mobile in rotation on the other of said primary flywheel (2) and said secondary flywheel (3).

3. Dual mass flywheel (1) according to Claim 2, wherein the roller (21) is mounted to be mobile in rotation on the other of said primary flywheel (2) and said secondary flywheel (3) by way of a rolling bearing.

4. Dual mass flywheel (1) according to any one of Claims 1 to 3, including a second leaf spring (17a, 17b, 17c, 17d) having a cam surface (20) and a second cam follower (21) adapted to cooperate with the cam surface (20) of said second leaf spring (17a, 17b, 17c, 17d), the first and second leaf springs (17a, 17b, 17c, 17d) being symmetrical with respect to the rotation axis X.

5. Dual mass flywheel (1) according to Claim 4, wherein the first and second leaf springs (17a, 17b, 17c, 17d) are carried by an annular body.

6. Dual mass flywheel (1) according to Claim 4, wherein the first and second leaf springs (17a, 17b) are each independently fastened either to said primary flywheel (2) or said secondary flywheel (3).

7. Dual mass flywheel (1) according to Claim 5, including third and fourth leaf springs (17a, 17b, 17c, 17d) having a cam surface (20) and third and fourth cam followers (21) adapted to cooperate with the cam surface (20) of the third and fourth leaf springs, respectively.

8. Dual mass flywheel (1) according to Claim 7, wherein the third and fourth leaf springs (17a, 17b, 17c, 17d) are carried by a second annular body (18) and are symmetrical with respect to the rotation axis X, the second annular body (18) being offset axially along the axis X relative to the first annular body (18).

9. Dual mass flywheel (1) according to Claim 8, wherein the third and fourth leaf springs (17a, 17b; 17c, 17d) are offset angularly by 90° relative to the first and second leaf springs (17c, 17d; 17a, 17b).

10. Dual mass flywheel (1) according to any one of Claims 1 to 9, wherein the cam follower (21) is disposed radially outside the leaf spring (17a, 17b; 17c, 17d).

11. Dual mass flywheel (1) according to any one of Claims 1 to 10, wherein the cam surface (20) is formed at a free end of the leaf spring (17a, 17b; 17c, 17d) .

12. Dual mass flywheel (1) according to Claim 11, wherein the leaf spring (17a, 17b; 17c, 17d) includes a curved portion extending circumferentially at the free end of which the cam surface (20) is formed.

13. Dual mass flywheel (1) according to any one of Claims 1 to 12, wherein the leaf spring (17a, 17b; 17c, 17d) is carried by an annular body (18) that is fixed to the primary flywheel (2), the cam follower (21) being carried by a rod (22) extending between the secondary flywheel (3) and a plate (23), the secondary flywheel (3) and the plate (23) lying on respective opposite sides of said annular body (18).

14. Dual mass flywheel (1) according to Claim 13, wherein the primary flywheel (2) includes a radially internal hub (5) supporting a bearing (4) for centring the secondary flywheel (3) on the primary flywheel (2) and an annular portion (6) including orifices for bolts (9) for fixing said dual mass flywheel (1) to the end of the crankshaft of an engine to pass through, lying radially beyond the centring bearing (4), the annular body (18) supporting the leaf spring (17a, 17b; 17c, 17d) including orifices (19) for said bolts (9) for fixing the dual mass flywheel (1) to the end of the crankshaft to pass through.

15. Dual mass flywheel (1) according to any one of Claims 1 to 14, wherein the leaf spring (17a, 17b; 17c, 17d) is carried by an annular body (18) fastened to the secondary flywheel (3), the primary flywheel (2) including a radially internal hub (5) supporting a rolling bearing (5) for centring the secondary flywheel (3) relative to the primary flywheel (2), the rolling bearing (5) including a inner race cooperating with the radially internal hub (5) and an outer race clamped between the annular body (18) supporting the leaf spring (17a, 17b; 17c, 17d) and the secondary flywheel (3) .

16. Dual mass flywheel (1) according to any one of Claims 1 to 15, wherein the friction members include a first friction ring (24, 32) adapted to be driven in rotation by either the primary flywheel (2) or the secondary flywheel (3) and a second friction ring (25, 34) adapted to be driven in rotation by the other of the primary flywheel (2) and the secondary flywheel (3) and a Belleville spring (24, 32) adapted to exert a force pushing the first friction ring (24, 32) against the second friction ring (25, 34).

17. Dual mass flywheel (1) according to any one of Claims 1 to 16, including end of travel abutments (36, 37) adapted to limit the relative angular movement between the primary flywheel (2) and the secondary flywheel (3).
